# EUROPEAN PATENT APPLICATION

(11) **EP 3 178 903 A1**
(43) Date of publication of application: **14.06.2017**
(21) Application number: 15199292.2
(22) Date of filing: 10.12.2015
(51) Int. Cl.: C09K 8/582, C09K 8/532, E21B 43/16, C02F 3/34

(54) **COMPOSITION AND METHOD FOR INHIBITION OF SRB IN MEOR**

(71) Applicant: Wintershall Holding GmbH, 34119 Kassel (DE)
(72) Inventor: Dopffel, Nicole, 67549 Worms (DE); Mahler, Eva, 67245 Lambsheim (DE); Herold, Andrea, 69469 Weinheim (DE); Alkan, Hakan, 50226 Frechen (DE)
(74) Representative: BASF IP Association

(57) **Abstract**

The present disclosure is directed to the use of a feed composition in a Microbial Enhanced Oil Recovery (MEOR) process, to a method for the preparation of a feed composition, and to a method of enhanced oil recovery by a MEOR process.

## Description

### Field of the invention

The present disclosure is directed to the use of a feed composition in a Microbial Enhanced Oil Recovery (MEOR) process, to a method for the preparation of a feed composition, and to a method of enhanced oil recovery by a MEOR process.

### Background of the invention

The demand for crude oils is still growing; however, the number of new oil fields discovered is decreasing. In this context, it is widely known that, unlike natural gas, the recovery of petroleum oil is not efficient. The conventional oil production technologies are able to recover only about one-half of the oil originally in place in a reservoir of light oil. For heavy oil, the recovery is often less than 10%. For a further exploitation of the oil reservoirs, fluids, such as water, are pumped into the oil reservoir. Oil recovery by injection of fluids not normally found in the reservoir is referred to as Enhanced Oil Recovery (EOR). Although it is sometimes referred to as tertiary recovery, it can be implemented as a secondary process. Many types of EOR have been proposed and used over the years. Technical complexity and/or the high cost of chemicals to be injected in the reservoir have prevented the widespread use of EOR.

One special type of EOR method uses microorganisms such as bacteria, archaea and eukaryotic single-cell organisms. The goal of this method, which is known as microbial enhanced oil recovery (MEOR), is to increase oil recovery using microorganisms. The major oil recovery mechanisms that microorganisms, including bacteria, archaea and eukaryotic single-cell organisms, affect are that they: (1) alter the permeability of the oil reservoir by producing low molecular weight acids which may cause rock dissolution, (2) produce biosurfactants that can decrease interfacial tension between oil and aqueous phases, (3) mediate changes in wettability causing the rock surface to be less hydrophobic, (4) produce biopolymers that improve (decrease) the mobility ratio of aqueous (displacing) to oil (displaced) phases by increasing the viscosity of aqueous phase, (5) produce lower molecular weight hydrocarbons by enzymatically cleaving the large hydrocarbons into smaller molecules, and thereby reduce the oil's viscosity also improving the above mentioned mobility ratio, (6) generate gases (predominantly carbon dioxide and nitrogen) that dissolves in oil improving the above mentioned mobility ratio and also increase formation pressure.

MEOR is presently considered as being the most cost-efficient approach among all EOR processes, but is generally the least often used. The main reason for that is its field-specific character and difficulties on the predictability. Furthermore, bacteria in oil wells, pipes and tanks are known to cause complications. In fact, it is believed that high viscosity heavy oil such as oil sands are the result of bacteria consuming the lighter weight petroleum components and leaving behind the high molecular weight fractions, which are less readily consumed, by the bacteria. Therefore, in the oil industry bacteria are often seen as a problem, not as a solution. In fact, if not treated correctly, the growth of bacteria could degrade the oil or increase the hydrogen sulfide concentration by promoted growth of sulfate reducing bacteria (SRB) in the reservoir.

Hydrogen sulfide (H₂S) is a toxic and colorless gas. It is considered as being a broad-spectrum poison, meaning it can poison several different systems in the body, in particular, the nervous system. Hydrogen sulfide is also notable for its capability to cause corrosion. It is corrosive to metals and it is also a precursor to sulfuric acid formation which corrodes concrete, metals and other materials. Thus, the evolution of hydrogen sulfide in installations for recovering oil has to be prevented strictly in order not to cause costly damages to existing installations for recovering oil.

CN 100508758 C discloses an agent for inhibiting the activity of sulfate reducing bacteria in the ground water of oil field comprising at least one nitrate and/or at least one nitrite and sodium molybdate.

US 2008/0145270 describes the use of Group VI oxyanions to inhibit the growth of sulfate-reducing bacteria.

US 5,405,531 discloses a method for reducing the amount of hydrogen sulfide in an aqueous system by using at least one nitrate and at least one molybdate.

CA 2804607 describes a method comprising the steps of a) treating a subterranean site in a zone adjacent to a water injection well with at least one detoxifying agent and b) adding an inoculum of microorganisms, wherein prior to the treatment of a) at least one corrosion inhibitor comprising at least one molybdate have been absorbed into the zone.

There is thus still a need for a feed composition that can be used to grow microbes, in particular bacteria, used for MEOR processes, in particular a feed composition that considers the inhibition or suppression of the growth of sulfate reducing bacteria, while directly promoting the growth of other bacteria that are indigenous to the oil reservoir or are added to the oil reservoir in order to achieve MEOR.

### Summary of the invention

It was surprisingly found that a feed composition comprising at least one carbohydrate selected from the group consisting of a carbohydrate selected from the group consisting of monosaccharides, disaccharides, polysaccharides, molasses, oils and fats, fatty acids, alcohols, and organic acids; at least one source of nitrogen, phosphorus and sulfur selected from the group consisting of a yeast, a yeast extract, and the combination of at least one nitrogen containing compound, at least one phosphorus containing compound and at least one sulfur containing compound; and at least one of a molybdate and a tungstate allows for an inhibition or suppression of the growth of sulfate reducing bacteria shortly after injection of said feed composition, while directly promoting the growth of other microbes, in particular bacteria, that are indigenous or added to the oil reservoir in order to achieve MEOR.

Thus, in a first aspect, the present disclosure is directed to the use of a feed composition comprising
A) at least one carbohydrate selected from the group consisting of monosaccharides, disaccharides, polysaccharides, molasses, oils and fats, fatty acids, alcohols, and organic acids;
B) at least one source of nitrogen, phosphorus and sulfur selected from the group consisting of a yeast, a yeast extract, and the combination of at least one nitrogen containing compound, at least one phosphorus containing compound and at least one sulfur containing compound; and
C) at least one of a molybdate and a tungstate
in a microbial enhanced oil recovery (MEOR) process.

In another aspect, the present disclosure is directed to a method for the preparation of a feed composition which may be used in MEOR.

In still another aspect, the present disclosure is directed to a method of enhancing the amount of recovered oil from an oil reservoir in an MEOR process using a feed composition as disclosed herein.

The aspects of the present disclosure will now be described in more detail with reference to the Examples. It is understood that one preferred embodiment described herein in connection with one aspect may also be freely combined with other preferred embodiments relating to the same or other aspects. Furthermore, preferred embodiments of one aspect may also be a preferred embodiment to another aspect of the present disclosure.

### Detailed description

As outlined above, microbial enhanced oil recovery (MEOR) is a technology based on the manipulation and control of the microbial environment existing in oil reservoirs. The altered microbial environment is then supposed to improve the oil recovery yield which is typically only about 30% for most oil reservoirs after primary recovery step. MEOR is also considered to enable well bore clean up, wherein mud and other debris blocking the oil flow are removed, or well stimulation by improving the flow of oil from the drainage area into the well bore.

The MEOR process used in connection with the present disclosure may relate to the injection of selected microbes and/or nutrients for microbes. The microbes inside the oil reservoir, typically including bacteria, archaea and eukaryotic single-cell organisms, may then positively affect the oil recovery. In accordance with the present disclosure, the MEOR process of the present disclosure may rely on indigenous microbes, i.e., microbes that are already present in the oil reservoir, or exogenous microbes, i.e., microbes that are added to the oil reservoir prior to or during the MEOR process.

Without being bound to any theory, it is believed that the method used in accordance with the present disclosure relies on subsequent decrease in viscosity of the oil (displaced phase) and increase in the viscosity of the water phase (displacing phase).

Without being bound to any theory, it is believed that molybdates and/or tungstates act as a sulfate analog, and that a specific enzyme in the SRBs may not differentiate between sulfate and molybdate or tungstate. If molybdate or tungstate is present, said molybdate or tungstate is processed in the SRBs and the cellular ATP is used up, and the cells then may not be active any more, or even die. Thus, the formation of hydrogen sulfide, which is toxic and causes corrosion of the installations, machines, etc., can be prevented.

### Feed composition

In a first aspect, the present disclosure is directed to the use of a feed composition comprising
A) at least one carbohydrate selected from the group consisting of monosaccharides, disaccharides, polysaccharides, molasses, oils and fats, fatty acids, alcohols, and organic acids;
B) at least one source of nitrogen, phosphorus and sulfur selected from the group consisting of a yeast, a yeast extract, and the combination of at least one nitrogen containing compound, at least one phosphorus containing compound and at least one sulfur containing compound; and
C) at least one of a molybdate and a tungstate
in a MEOR process.

The feed composition thus comprises as compulsory components at least one carbohydrate selected from the group consisting of monosaccharides, disaccharides, polysaccharides, molasses, oils and fats, fatty acids, alcohols, and organic acids, and at least one source of nitrogen, phosphorus and sulfur selected from the group consisting of a yeast, a yeast extract, and the combination of at least one nitrogen containing compound, at least one phosphorus containing compound and at least one sulfur containing compound. As further compulsory components, at least one molybdate and/or at least one tungstate are present, i.e., the composition contains molybdate and/or tungstate. As further optional components in addition to or instead of the at least one molybdate and/or at least one tungstate, at least one of a nitrate and a nitrite are present. In other words, the feed composition may optionally contain at least one nitrate and/or at least one nitrite.

In a preferred embodiment, the feed composition comprises or consists of
A) at least one carbohydrate selected from the group consisting of monosaccharides, disaccharides and polysaccharides;
B) at least one of a hydrolyzed yeast extract and an autolyzed yeast;
C) at least one of a molybdate and a tungstate;
D) optionally at least one of a nitrate and a nitrite; and
water.

In a more preferred embodiment, the feed composition comprises or consists of
A) at least one disaccharide, preferably sucrose;
B) at least one yeast extract;
C) at least one molybdate; and
water.

In another preferred embodiment, the feed composition comprises or consists of
A) at least one disaccharide, preferably sucrose, in an amount of 0.1 to 20 g/l;
B) at least one yeast extract in an amount of 0.1 to 5 g/l;
C) at least one molybdate in an amount of 0.01 to 1 g/l; and
water.

In another preferred embodiment, the feed composition comprises or consists of
A) at least one disaccharide, preferably sucrose, in an amount of 0.1 to 20 g/l;
B) at least one yeast extract in an amount of 0.1 to 5 g/l;
C) at least one molybdate in an amount of 0.01 to 1 g/l; and

In another preferred embodiment, the feed composition comprises or consists of
A) at least one disaccharide, preferably sucrose, in an amount of 0.1 to 10 g/l;
B) at least one yeast extract in an amount of 0.1 to 5 g/l;
C) at least one molybdate in an amount of 0.01 to 1 g/l; and
water.

In another preferred embodiment, the feed composition comprises or consists of
A) at least one disaccharide, preferably sucrose, in an amount of 0.1 to 10 g/l;
B) at least one yeast extract in an amount of 0.1 to 5 g/l;
C) at least one molybdate in an amount of 0.01 to 1 g/l; and
water.

In an even more preferred embodiment, the feed composition comprises or consists of
A) sucrose;
B) at least one yeast extract;
C) at least one molybdate; and
water.

In another even more preferred embodiment, the feed composition comprises or consists of
A) sucrose in an amount of 0.1 to 10 g/l;
B) at least one yeast extract in an amount of 0.1 to 5 g/l;
C) at least one molybdate in an amount of 0.05 to 1 g/l; and
water.

In another even more preferred embodiment, the feed composition comprises or consists of
A) sucrose in an amount of 1.0 to 10 g/l;
B) at least one yeast extract in an amount of 0.1 to 5 g/l;
C) at least one molybdate in an amount of 0.05 to 1 g/l; and
water.

### Carbohydrate

As outlined above, one of the compulsory elements of the feed composition for use in a MEOR process is at least one carbohydrate selected from the group consisting of monosaccharides, disaccharides, polysaccharides, molasses, oils and fats, fatty acids, alcohols, and organic acids.

In a preferred embodiment, the at least one carbohydrate is present in an amount of from 0.1 to 10 g/l, preferably from 0.5 to 8 g/l, more preferably form 1 to 7 g/l, even more preferably form 2 to 6 g/l, based on the volume of the feed composition.

Whenever a concentration of a component or element of the feed composition is given in the present disclosure, it is given in g/l, based on the (total) volume in liter of the final feed composition.

For example, the monosaccharide can be selected from the group consisting of glucose, fructose, galactose, ribose and xylose.

The polysaccharide can be selected from the group consisting of oligofructose, cyclodextrins, starch, cellulose and maltodextrins.

Preferably, the at least one carbohydrate comprises a disaccharide. More preferably, the at least one carbohydrate is a disaccharide selected from the group consisting of sucrose, maltose, lactose, lactulose, trehalose and cellobiose. Most preferably, the at least one carbohydrate is sucrose.

It is understood that more than one carbohydrate may be present. In other words, also combinations of different carbohydrates may be used in accordance with the present disclosure. In a preferred embodiment, only a single carbohydrate is used in the feed composition of the present disclosure.

In another preferred embodiment, there is no other sugar present, apart from sucrose. In other words, sucrose is the only sugar present, and the feed composition does not contain any monosaccharides, disaccharides, or polysaccharides other than sucrose. This, however, does not exclude traces of other sugars possibly present in the sucrose. According to this embodiment, the amount of monosaccharides, disaccharides, or polysaccharides other than sucrose is thus less than 1 % by wt., based on the amount of sucrose present, preferably less than 0.1 % by wt., further preferably less than 0.01 % by wt., and still further preferably less than 0.001 % by wt. In a preferred embodiment, another carbohydrate apart from saccharides (sugars) is present in the feed composition. In still another preferred embodiment, sucrose is the only carbohydrate present in the feed composition of the present disclosure. This, again, contemplates the presence of minor amounts of other sugars, as defined herein above.

In a preferred embodiment, the oils and fats may be selected from soy oil, sunflower, oil, peanut oil, and coconut oil.

According to another preferred embodiment, the fatty acids may be selected form the group consisting of palmitic acid, stearic acid and linoleic acid.

The alcohols may be selected from ethanol and glycerol.

An exemplary embodiment of an organic acid is acetic acid.

The feed composition that is used according to the present disclosure may further comprise additional carbon sources selected from the group consisting of acetates, Krebs cycle intermediates, malonates, citrates, lactates, ethanol and glycerol.

### Source of nitrogen, phosphorus and sulfur

As the second compulsory element, the feed composition of the present disclosure contains at least one source of nitrogen, phosphorus and sulfur selected from the group consisting of a yeast, a yeast extract, and the combination of at least one nitrogen containing compound, at least one phosphorus containing compound and at least one sulfur containing compound.

The source of nitrogen, phosphorus and sulfur serves to provide the essential three elements for the growth of the microbes, in particular bacteria, in the MEOR process.

In a preferred embodiment, the source of nitrogen, phosphorus and sulfur is a source of nitrogen and phosphor, not necessarily providing sulfur. According to this embodiment, a source of sulfur may be present, or it may be absent, i.e., it may be excluded.

In a preferred embodiment, the source of nitrogen, phosphorus and sulfur may be provided in the form of a yeast or yeast extract.

Any yeast extract commercially available may be used for the purposes of the present disclosure. Without being bound to any theory it is assumed that the yeast extract serves as a source for nitrogen (N), phosphorus (P), sulfur (S) and amino acids. Yeast extracts having a high content of amino acids, nitrogen and phosphorus are thus preferred. It is furthermore preferred that the yeast extract contains vitamins, such as vitamins B1, B2, B5, B6, B8, B9, B12, choline, inositol and PP (niacin); minerals, such as sodium, potassium, phosphorous, calcium, magnesium, selenium and zinc; and heavy metals, such as arsenic, cadmium, mercury and lead. As preferred amino acids, alanine, arginine, aspartic acid, cystine, glutamic acid, glycine histidine, Isoleucine, leucine, lysine, methionine, phenylalanine, proline, serine, threonine, tyrosine, tryptophan, and valine may be mentioned.

In a preferred embodiment, the yeast extract of the feed composition is derived from *Saccharomyces cerevisiae,* comprising amino acids, vitamins, minerals and heavy metals.

It is understood that the initial yeast extract product may not be sterile and may contain, for example, up to 5000 CFU/g (unspecified) mesophilic bacteria. In order to be sure that no bacteria are injected during the MEOR process, it is preferred that the yeast extract is bacteria-free (e.g. by sterile filtration or heat inactivation).

In another preferred embodiment, the yeast extract is present in the feed composition of the present disclosure in an amount of from 0.1 to 5 g/l, preferably from 0.2 to 3 g/l, more preferably from 0.3 to 2 g/l, even more preferably from 0.5 to 1 g/l, based on the volume of the feed composition.

Preferably, the yeast extract is an autolyzed yeast extract or a hydrolyzed yeast extract.

In another embodiment, the feed composition contains an autolyzed yeast as compulsory component. Autolyzed yeast is a precursor of an autolyzed yeast extract. It comprises concentrates of the soluble materials, which may be obtained from yeast after disruption of the cells and digestion (lysis) of the polymeric yeast material (wherein the active yeast enzymes released in the medium after cell disruption contribute to the lysis), and the insoluble formed during the lysis, mainly due to the degraded yeast cell wall fraction.

In a preferred embodiment, the nitrogen containing compound, as used in the combination of a nitrogen containing compound, a phosphorus containing compound and a sulfur containing compound, is selected from another organic compounds containing nitrogen or an inorganic compound containing nitrogen.

In another preferred embodiment, the inorganic compound containing nitrogen is an inorganic ammonium salt, preferably selected from the group consisting of ammonium sulfate, ammonium chloride ammonium phosphate, ammonium carbonate and ammonium nitrate.

In another preferred embodiment, the phosphorus containing compound, as used in the combination of a nitrogen containing compound, a phosphorus containing compound and a sulfur containing compound, is selected from the group consisting of phosphoric acid, potassium dihydrogen phosphate, dipotassium hydrogen phosphate, sodium dihydrogen phosphate, and disodium hydrogen phosphate.

In another preferred embodiment, the sulfur containing compound, as used in the combination of a nitrogen containing compound, a phosphorus containing compound and a sulfur containing compound, is selected from the group consisting of sulfuric acid, potassium hydrogen sulfate, dipotassium sulfate, sodium hydrogen sulfate, sulfur-containing amino acids like cysteine and methionine and disodium sulfate.

In a preferred embodiment, the organic compound containing nitrogen is selected from the group consisting of peptones, tryptones, meat extract, malt extract, corn steep liquor, soya flour and urea.

The composition that is used according to the present disclosure may include additional components selected from the group comprising trace metals, salts, nitrogen, phosphorus, magnesium and buffering chemicals.

It is understood that the nitrogen, phosphorus and sulfur sources may be used individually or as a mixture, and also optionally in combination with yeast or yeast extract. Furthermore the composition can contain metal salts, such as for example magnesium sulfate or iron sulfate, which are necessary for growth. Finally, growth-promoting substances, such as amino acids and vitamins may also be used in addition to the above-stated substances.

### Molybdates and Tungstates

The feed composition of the present disclosure contains at least one of a molybdate and a tungstate, preferably a molybdate. In other words, the feed composition contains at least one molybdate and/or at least one tungstate, and preferably the feed composition contains at least one molybdate.

In a preferred embodiment, the feed compositions of the present disclosure contain at least one of a molybdate and a tungstate, preferably a molybdate. In another preferred embodiment, the feed composition does not contain any tungstate. A feed composition being free from tungstate contains less than 1 ppm tungstate. In another embodiment, the feed composition does not contain any tungstate at all, i.e., tungstate is not detectable in the feed composition.

When a molybdate and/or a tungstate is present in the feed composition of the present disclosure, the molybdate(s) and/or tungstate(s) is present in an amount of from 0.05 to 10 g/l, preferably from 0.075 to 2 g/l, more preferably from 0.1 to 1 g/l, even more preferably from 0.25 to 0.75 g/l, based on the volume of the feed composition.

Preferably, the at least one molybdate and the at least one tungstate as used in the present disclosure is represented by the formulas X^{+z}ₙ(MoO₄)ₚ and X^{+z}ₙ(MoO₄)ₚ, respectively, wherein X is any positively charged species and nz = 2p. For example, X can be an alkali, alkaline earth, main group, transition or rare earth metal.

More preferably, the at least one molybdate is selected from the group consisting of potassium molybdate (K₂MoO₄), sodium molybdate (Na₂MoO₄), ammonium molybdate ((NH₄)₂MoO₄), calcium molybdate (CaMoO₄), iron(II) molybdate (FeMoO₄), iron(III) molybdate (Fe₂(MoO₄)₃), lead molybdate (PbMoO₄), copper(II) molybdate (CuMoO₄), lithium molybdate (Li₂MoO₄), zinc molybdate (ZnMoO₄), cadmium molybdate (CdMoO₄), silver(I) molybdate (MoAg₂O₄) barium molybdate (BaMoO₄), manganese(II) molybdate (MnMoO₄), molybdic acid (H₂MoO₄), bismuth molybdate (Bi₂Mo₃O₁₂), aluminum molybdate (Al₂(MoO₄)₃), cerium molybdate (Ce₂(MoO₄)₃), cesium molybdate (CsMoO₄), cobalt molybdate (CoMoO₄), nickel molybdate (NiMoO₄), rubidium molybdate (Rb₂MoO₄), magnesium molybdate (MgMoO₄), strontium molybdate (SrMoO₄) and zinc molybdate (ZnMoO₄).

Even more preferably, the at least one molybdate is selected from the group consisting of potassium molybdate (K₂MoO₄), sodium molybdate (Na₂MoO₄), ammonium molybdate ((NH₄)₂MoO₄), calcium molybdate (CaMoO₄), iron(II) molybdate (FeMoO₄), iron(III) molybdate (Fe₂(MoO₄)₃), lead molybdate (PbMoO₄), copper(II) molybdate (CuMoO₄), lithium molybdate (Li₂MoO₄), zinc molybdate (ZnMoO₄), cadmium molybdate (CdMoO₄), silver(I) molybdate (MoAg₂O₄), barium molybdate (BaMoO₄), manganese(II) molybdate (MnMoO₄), molybdic acid (H₂MoO₄) and bismuth molybdate (Bi₂Mo₃O₁₂).

Most preferably, the at least one molybdate is selected from the group consisting of potassium molybdate (K₂MoO₄), sodium molybdate (Na₂MoO₄), ammonium molybdate ((NH₄)₂MoO₄) and calcium molybdate (CaMoO₄).

In particular, the at least one molybdate is potassium molybdate (K₂MoO₄) and/or sodium molybdate (Na₂MoO₄).

More preferably, the at least one tungstate is selected from the group consisting of aluminum tungstate Al₂(WO₄)₃), manganese tungstate (MnWO₄), barium tungstate (BaWO₄), cadmium tungstate (CdWO₄), cerium tungstate (Ce₂(WO₄)₃), cesium tungstate (CsWO₄), cobalt tungstate (CoWO₄), nickel tungstate (NiWO₄), copper(II) tungstate (CuWO₄), silver(I) tungstate (Ag₂WO₄), lithium tungstate (Li₂WO₄), sodium tungstate (Na₂WO₄) potassium tungstate (K₂WO₄), rubidium tungstate (Rb₂WO₄) magnesium tungstate (MgWO₄) calcium tungstate (CaWO₄), strontium tungstate (SrWO₄) and zinc tungstate (ZnWO₄).

### Nitrate and Nitrite

The feed compositions of the present disclosure preferably contains at least one of a nitrate and/or at least one of a nitrite.

More preferably, the at least one nitrate is sodium nitrate.

More preferably, the at least one nitrite is sodium nitrite.

In a preferred embodiment, the feed composition of the present disclosure is free of nitrate and nitrite, i.e., the feed composition does not contain any nitrate and/or nitrite. Thus, also the source of nitrogen, phosphorus and sulfur does not contain any nitrate and nitrite. A feed composition being free from nitrate and/or nitrite contains less than 100 ppm nitrate and/or nitrite, preferably less than 50 ppm nitrate and/or nitrite, more preferably less than 10 ppm nitrate and/or nitrite, and even more preferably less than 1 ppm nitrate and/or nitrite. In another embodiment, the feed composition does not contain any nitrate and/or nitrite at all, i.e., nitrate and/or nitrite is not detectable in the feed composition.

When a nitrate and/or a nitrite is present in the feed composition of the present disclosure, the nitrate(s) and/or nitrite(s) is present in an amount of from 0.1 to 30 g/l, preferably from 0.5 to 20 g/l, more preferably from 0.6 to 10 g/l, even more preferably from 0.8 to 5 g/l, based on the volume of the feed composition.

### Preparation of feed composition

In another aspect, the presently disclosure is directed to a method for the preparation of a feed composition as described herein.

The method for the preparation of a feed composition as described above comprises dissolving a dry powder containing all ingredients of the feed composition in water, or diluting a stock solution containing all ingredients of the feed composition with water, to the desired concentration.

Preferably the water that is used for preparation of the feed composition is demineralized water.

### Method of enhanced oil recovery

In still another aspect, the present disclosure is directed to a method of enhancing the amount of recovered oil from an oil reservoir in an MEOR process using a feed composition as disclosed herein.

In yet another aspect, the present disclosure is directed to a method of enhancing oil recovery from an oil reservoir comprising
a) providing an oil reservoir;
b) introducing a feed composition as defined above; and
c) recovering oil from said oil reservoir.

When enhancing the amount of oil recovered from an oil reservoir by a MEOR process, the amount of oil recovered from a conventional MEOR process, without use of the feed composition of the present disclosure, is less than the amount of oil recovered from a MEOR process using the feed composition of the present disclosure. In other words, when a conventional MEOR process does not allow for a commercial exploitation of the oil filed any more, a commercially relevant exploitation of said oil field may still be possible using the feed composition of the present disclosure.

Preferably, the feed composition in step b) is injected into an injection well and flows in the oil reservoir. Preferably, the feed composition is further diluted with injection water upon injection into the injection well. The term "injection water" refers to a fluid injected into oil reservoirs. Injection water may be supplied from any suitable source, and may include, for example, sea water, brine, production water, water recovered from an underground aquifer, including those aquifers in contact with the oil, or surface water from a stream, river, pond or lake. As it is known in the art, it may be necessary to remove particulate matter including dust, bits of rock or sand and corrosion by-products such as rust from the water prior to injection into the one or more well bores. Methods to remove such particulate matter include filtration, sedimentation and centrifugation.

Preferably, the recovery of oil in step c) is by introducing injection water to the oil reservoir following a period of microorganism growth and recovering the injection water which is mixed with oil.

In a preferred embodiment, the method of enhancing the amount of recovered oil comprises a method step wherein a feed composition as disclosed herein is added to or injected into an oil field or oil reservoir.

In a preferred embodiment of the present disclosure, the oil is crude oil. Most preferably the oil is crude oil having an API gravity in the range between 20 °API and 40 °API. Such oils, by nature of their composition, usually contain asphaltenes and polar hydrocarbons. API gravity is defined as following formula by the American Petroleum Institute: API gravity = (141.5/Specific Gravity) - 131.5, where specific gravity is a ratio of the density of oil to the density of a reference substance, usually water, and is always determined at 60 degrees Fahrenheit.

The feed composition of the present disclosure may be used for the stimulation indigenous microbes (that are present already in the oil reservoir) or for the stimulation of exogenous microbes that are added from outside to the oil reservoir.

In a preferred embodiment, the method and the feed composition do not comprise the addition of (exogenous) microbes, in particular bacteria. In other words, the feed composition is free of bacteria, in particular free of exogenous bacteria, and the bacteria, in particular exogenous bacteria, are not added to the oil reservoir by the methods of the present disclosure.

The bacteria present in the oil reservoir may comprise bacteria, in particular carbohydrate metabolizing bacteria, such as *Clostridium, Bacillus, Brevibacillus, Pseudomonas, Burkholderia, Shewanella, Petrotoga, Marinobacter, Halanaerobium, Comamonas, Geotoga, Acrobacter, Orenia, Halomonas, Chromohalobacter, Haloferax (archaea), Sphinogomonas, Thermotoga, Thermoanaerobacter, Acetobacterium, Arthrobacter, Micrococcus, Klebsiella, and Flexistipes, and*/*or hydrocarbon metabolizing bacteria, such as Alcaligenes, Alcanivorax, Acinetobacter, Paracoccus, Rhodococcus, Bacillus, Burkholderia, Dietzia, Geobacillus, Gordonia, Marinobacter, Mycobacterium, Pseudomonas, Thalassolituus, Thermooleophilum*, *Thermus, Synthrophus, Oleiphilus,* and *Oleispira.*

It is assumed that by using the feed composition and the methods disclosed herein, the metabolites formed by the microbes, in particular the bacteria, present in the oil reservoir, which metabolites are at least partly responsible for the effects achieved by MEOR, are more stable, i.e., stable over a longer period of time, compared to a MEOR process not making use of the feed composition of the present disclousre, and thus MEOR works for a longer period of time and allows for a better exploitation of the oil reservoir.

The feed composition of the present disclosure may in particular be used to stimulate halophiles, especially *Halanaerobium* and *Geotoga.* The presence of the halophile microorganisms in the oil field may be determined by 16S rRNA sequencing. It is furthermore assumed that the feed compositions of the present disclosure will not stimulate methanogens and subsequent methane production to a large extent. Laboratory experiments suggest that the stimulation by the feed composition results in the production of CO₂ and that the *Halanaerobium* and *Geotoga* will prefer sucrose as a carbon source over other endogenous carbon sources present in the oil reservoir.

The oil reservoir may vary in their salinity. The oil reservoir in which the feed composition of the present disclosure is injected is a high salt environment. The salinity of samples from production and/or injection well heads of the oil reservoir may be at least 35 parts per thousand (ppt) which is similar to the salinity of sea water. The salinity may be higher than 35 ppt including the range of 35 to 200 ppt which is about six times the salinity of sea water. More preferably the salinity of the oil reservoir is in the range of 165 to 200 ppt.

After introduction of the feed composition according to the present disclosure a period of time is allowed for growth of the microbes, in particular the bacteria, that are present in the oil reservoir. The period of growth may be a week or more. In one embodiment, this period is two or three weeks. Following this period, injection water is introduced into the well bore and it flows through the reservoir. Alternatively, the injection water containing oil can be pumped out of the well. Once the production rate of oil falls off, the reservoir can be put through another cycle of introducing a feed composition and injection water, allowing bacteria to grow and pumping out the injection water containing oil.

### Definitions

"Sucrose" is a disaccharide combination of the monosaccharides glucose and fructose linked via an ether bond between C1 on the glucosyl subunit and C2 on the fructosyl unit.

"Sugar" as used herein refers to the group consisting of monosaccharides, disaccharides and polysaccharides.

"Yeast extract" is a composition comprising the water-soluble components extracted from yeast cells. Yeast extracts can be divided into autolyzed and hydrolyzed yeast extracts.

"Autolyzed yeast extracts" are concentrates of the soluble materials which may be obtained from yeast after disruption of cells and digestion (lysis) of the polymeric yeast material. The active yeast enzymes released in the medium after cell disruption contribute to the lysis. These types of yeast extract are rich in amino acids and generally do not comprise 5'-ribonucleotides because during the autolytic process the native RNA is decomposed or modified in a form which is not degradable into 5'-ribonucleotides.

"Hydrolyzed yeast extracts" are concentrates of the soluble materials and may be obtained from yeast after disruption of the cells, digestion (lysis) and addition of exogenous enzymes such as proteases and/or peptidases and especially nucleases, such as 5'-phosphodiesterase and optionally 5'-adenylic deaminase to the yeast suspension during lysis. The native yeast enzymes are generally inactivated prior to the lysis. During this process, 5'-ribonucleotides of guanine (5'-guanine mono phosphate; 5'-GMP), uracil (5'-uracil mono phosphate; 5'-UMP), cytosine (5'-cytosine mono phosphate; 5'-CMP) and adenine (5'-adenine mono phosphate; 5'-AMP) may be formed. When adenylic deaminase is added to the mixture, 5'-AMP is transformed into 5'-inosine mono phosphate (5'-IMP). The hydrolyzed yeast extracts obtained by this method are therefore rich in 5'-ribonucleotides, especially rich in 5'-GMP and 5'-IMP.

The term "another organic compounds containing nitrogen" refers to any organic compound that has a nitrogen atom in its molecule, excluding yeasts and yeast extracts.

"Peptones" as used herein are a mixture of peptides and amino acids prepared by the hydrolysis of animal or plant proteins using the enzyme pepsin or chemically using acids.

"Tryptones" as used herein are a mixture of peptides and amino acids prepared by the hydrolysis of animal or plant proteins using the enzyme trypsin.

"Oil" means a fluid containing a mixture of condensable hydrocarbons of more than 90 wt.-%, preferably of more than 99 wt.-%. In particular "oil" can be defined as a mixture consisting of condensable hydrocarbons.

"Hydrocarbons" are organic material with molecular structures containing carbon and hydrogen. Hydrocarbons may also include other elements, such as, but not limited to, halogens, metallic elements, nitrogen, oxygen, and/or sulfur.

The term "(well)bore" refers to a hole in a formation made by drilling or insertion of a conduit into the formation. A wellbore may have a substantially circular cross section, or other cross-sectional shapes (e.g., circles, ovals, squares, rectangles, triangles, slits, or other regular or irregular shapes). As used herein, the terms "well" and "opening," when referring to an opening in the formation may be used interchangeably with the term "(well)bore."

"Crude oil" is defined as a mixture of hydrocarbons that existed in liquid phase in an oil reservoirs and remains liquid at atmospheric pressure after passing through surface separating facilities and which has not been processed through a crude oil distillation tower.

The terms "oil reservoir" and "reservoir" are used interchangeably herein, and refer to a subterranean or subsea-bed formation from which oil may be recovered. The formation is generally a body of rocks and soil having sufficient porosity and permeability to store and transmit oil.

### Experimental Part

### Example 1

Deionized / tap water was used to prepare different solutions containing 2.5 g/l sucrose (available from Südzucker, Germany), 0.5 g/l yeast extract powder (HighTec Grade Yeast Extract

available from Springer^{®} 0207 / 0 - PW - L), and a varying concentration of sodium molybdate (Na₂MO₄, available from Acros, Germany) from 0.01 g/l to 0.75 g/l, i.e., solutions with a concentration of 0.01 g/l, 0.025 g/l, 0.05 g/l, 0.1 g/l, 0.25 g/l, 0.5 g/l, and 0.75 g/l. As a comparative example, a solution without molybdate was prepared, i.e., only containing sucrose and yeast extract.

The solutions were incubated at 42 °C for 43 days in anaerobic conditions, and the production of H₂S was measured (in ppm) in the headspace of culture bottles via gas chromatography (GC). The respective amounts of H₂S in ppm are given in Table 1 below for different points in time where the samples were taken. As is apparent, the amount of H₂S produced is significantly reduced above a concentration of 0.05 g/l of sodium molybdate. Above a concentration of 0.25 g/l of sodium molybdate, no H₂S formation could be observed at all.

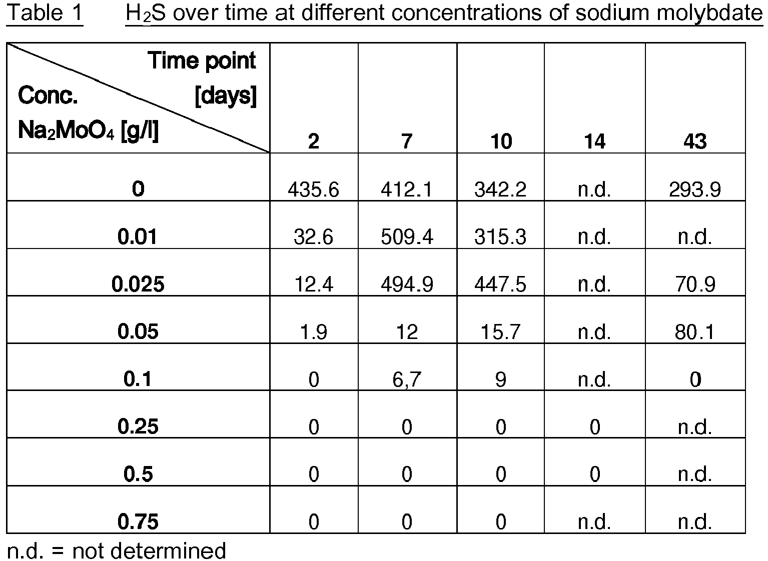

### Example 2: Sandpack column with sodium molybdate

A glass column (length 27 cm, diameter 5.2 cm) was filled with 100 % quartz sand, evacuated and saturated with original reservoir water (injection water, composition given in Table 1, analyzed via ion chromatography and ICP) which was then displaced by crude oil (original oil from the corresponding oil field). Subsequently, oil was produced for 5 pore volumes (PV) using reservoir water until no more oil was produced. Nutrients (between 5-10 g/l sucrose and 1-2 g/l yeast extract) and sodium molybdate (in all cases 0.1 g/l) were injected twice, each followed by an incubation phase of several days. Together with a water flood at the end of the experiment, additional oil was recovered. Gases were measured via gas chromatography (GC) during incubation and production. No H₂S could be detected at any time point.

**Table 2 Water analysis of injection water**

| **Species** | **Amount [mg/L]** |
|---|---|
| Iron | 86 |
| Sulfate | 66.5 |
| Phosphate | <2 |
| Nitrate | <1 |
| | |
| Calcium | 14000 |
| Sodium | 45900 |
| | |
| Density at 20°C | 1.114 g/L |
| pH | 5.7 |

## Claims

1. The use of a feed composition comprising
A) at least one carbohydrate selected from the group consisting of monosaccharides, disaccharides, polysaccharides, molasses, oils and fats, fatty acids, alcohols, and organic acids;
B) at least one source of nitrogen, phosphorus and sulfur selected from the group consisting of a yeast, a yeast extract, and the combination of at least one nitrogen containing compound, at least one phosphorus containing compound and at least one sulfur containing compound; and
C) at least one of a molybdate and a tungstate
in a MEOR process.

2. The use according to claim 1, wherein the at least one carbohydrate is present in an amount of from 0.1 to 20 g/l, based on the volume of the feed composition.

3. The use according to claim 1 or 2, wherein the at least one carbohydrate is selected from the group consisting of monosaccharides, disaccharides and polysaccharides.

4. The use according to claim 3, wherein the at least one disaccharide is selected from the group consisting of sucrose, maltose, lactose, lactulose, trehalose and cellobiose.

5. The use according to any one of claims 1 to 4, wherein the at least one source of nitrogen, phosphorus and sulfur is a yeast extract,.

6. The use according to claim 5, wherein the yeast extract is a hydrolyzed and/or autolyzed yeast extract, and is present in an amount of from 0.1 to 5 g/l, based on the volume of the feed composition.

7. The use according to any one of claims 1 to 6, wherein the molybdate and/or tungstate is present in an amount of from 0.05 to 10 g/l, based on the volume of the feed composition.

8. The use according to any one of claims 1 to 7, wherein the feed composition does not contain any microbes.

9. A method of enhancing oil recovery from an oil reservoir comprising
a) providing an oil reservoir;
b) introducing a feed composition as defined in any one of claims 1 to 8; and
c) recovering oil from said oil reservoir.

10. The method of claim 9, wherein the feed composition in step b) is injected into an injection well and flows into the oil reservoir.

11. The method of claim 9, wherein the recovery of oil in step c) is by introducing injection water to the oil reservoir following a period of microorganism growth and recovering the injection water mixed with oil.

12. The method of claim 11, wherein the oil reservoir is a high salt environment with at least 35 ppt salinity.

13. A method for the preparation of a feed composition as defined in any one of claims 1 to 9, wherein a dry powder containing all ingredients of the feed composition is dissolved in water, or wherein a concentrated stock solution containing all ingredients of the feed solution is diluted in water, to the desired concentration.
